# EUROPÄISCHE PATENTSCHRIFT

(11) **EP 3 953 784 B1**
(45) Veröffentlichungstag und Bekanntmachung des Hinweises auf die Patenterteilung: **03.05.2023**
(21) Anmeldenummer: 20721450.3
(22) Anmeldetag: 09.04.2020
(51) Int. Cl.: G05D 7/06, G01F 3/00, G01F 15/02, G05B 19/43

(54) **VERFAHREN ZUR BESTIMMUNG EINES WERTS EINER PROZESSVARIABLEN IN EINER FLUIDTECHNISCHEN ANLAGE**
METHOD FOR DETERMINING A VALUE OF A PROCESS VARIABLE IN A FLUID SYSTEM
PROCÉDÉ POUR LA DÉTERMINATION D'UNE VALEUR D'UNE VARIABLE DE PROCESSUS DANS UNE INSTALLATION FLUIDIQUE

(30) Priorität: 11.04.2019 DE 102019109625
(43) Veröffentlichungstag der Anmeldung: 16.02.2022
(73) Patentinhaber: Samson Aktiengesellschaft, 60314 Frankfurt am Main (DE)
(72) Erfinder: THOMAS, Steckenreiter, 63322 Roedermark (DE); VNUCEC, Domagoj, 68549 Ilvesheim (DE)
(74) Vertreter: Puschmann Borchert Kaiser Klettner Patentanwälte Partnerschaft mbB
(86) Internationale Anmeldenummer: PCT/EP2020/060288
(87) Internationale Veröffentlichungsnummer: WO 2020/208209

(56) Entgegenhaltungen:
- DE-A1- 3 943 357
- DE-A1-102007 058 211
- DE-A1-102016 112 093

## Beschreibung

Die Erfindung betrifft ein Verfahren zur Bestimmung eines Werts einer Prozessvariablen in einem Prozessstrang einer fluidtechnischen Anlage, in dem ein Prozessmedium gefördert wird, wobei in dem Prozessstrang wenigstens zwei unterschiedliche Aktoren liegen, denen jeweils wenigstens eine Betriebsvariable und jeweils ein auf der wenigstens einen Betriebsvariablen basierendes Kennfeld zugeordnet ist.

Die Regelung der Aktoren im Prozessstrang erfolgt regelmäßig aufgrund von Prozessvariablen, deren Wert entweder mittels Sensoren erfasst oder berechnet wird.

So ist in der DE 10 2016 112 093 A1 ist ein Verfahren zur Regelung eines Volumenstroms in einem Prozessstrang beschrieben, bei dem ein erster Aktor bzw. eine Pumpe und ein zweiter Aktor bzw. ein Drosselventil in Reihe geschaltet sind. In Abhängigkeit eines Sollwerts des Volumenstroms wird die Öffnungsweite des Drosselventils eingestellt, um anhand der Öffnungsweite eine den Volumenstrom über den Differenzdruck auftragende Kennlinie der Pumpe festzulegen. Der zur Strömungsregelung verwendete Volumenstrom wird durch einen Volumenstromsensor erfasst,

Die Verwendung von Sensoren kann jedoch entsprechend teuer sein und die Verwendung einer berechneten Prozessvariablen unter Verwendung nur eines Aktor-Kennfelds kann zu ungenau oder unmöglich sein.

Die DE 10 2007 058 211 A1 beschreibt ein Verfahren zur Bestimmung eines Volumenstroms zur Prozessregelung einer Prozessanlage, in der ein Prozessmedium gefördert wird. Die Prozessanlage weist wenigstens einen ersten Aktor bzw. eine Pumpe auf, der mehrere zueinander parallel geschaltete Strömungskanäle mit einem Volumenstrom des Mediums versorgt. Die Strömungskanäle umfassen jeweils einen Rohrstrang, der einen Verbraucher sowie einen zweiten Aktor aufweist, der als ein über einen Regler angesteuertes Drosselventil ausgebildet ist. Der Pumpe ist ein bekanntes Pumpenkennfeld zugeordnet, das auf einer Betriebsvariablen Leistung basiert und aus dem die Prozessvariable Volumenstrom ermittelt wird. Der Prozessanlage ist ein Anlagenkennlinienfeld zugeordnet, welches eine Abhängigkeit des Strömungswiderstandes des gesamten Leitungssystems bei unterschiedlicher Drosselung aller Ventile darstellt. Unter Verwendung der Pumpenkennlinien und der Anlagenkennlinien wird die Leistung der Pumpe und somit der erzeugte Gesamtvolumenstrom verändert, damit in zumindest einem der Strömungskanäle keine individuelle Drosselung des jeweiligen Volumenstroms erforderlich ist.

Es ist daher Aufgabe der Erfindung, ein Verfahren anzugeben, nach dem in einer prozesstechnischen Anlage eine Prozessvariable in dem Prozessstrang mit entsprechender Genauigkeit ermittelt werden kann, ohne diese sensorisch zu erfassen.

In bekannter Weise werden Werte einer Prozessvariablen zur Prozessregelung oder Prozesssteuerung einer fluidtechnischen Anlage in einem Prozessstrang einer fluidtechnischen Anlage, in dem ein Prozessmedium gefördert wird, erfasst. In dem Prozessstrang liegen ein erster Aktor und ein zweiter Aktor, wobei dem ersten Aktor eine Betriebsvariable und dem zweiten Aktor eine zweite Betriebsvariable zugeordnet ist. Dem ersten Aktor ist ein auf der ersten Betriebsvariablen basierendes erstes Kennfeld zugeordnet und dem zweiten Aktor ist ein auf der zweiten Betriebsvariablen basierendes zweites Kennfeld zugeordnet.

Erfindungsgemäß wird unter Verwendung der Werte der ersten Betriebsvariablen und der zweiten Betriebsvariablen und eines Rechenmodells, das das erste Kennfeld und das zweite Kennfeld umfasst, der Wert der von der Betriebsvariablen unterschiedlichen Prozessvariablen bestimmt.

Durch die Berücksichtigung der Kennfelder von wenigstens zwei Aktoren im Rechenmodell können nun mehr Prozessvariablen berechnet werden oder eine Prozessvariable kann genauer berechnet werden.

Eine Betriebsvariable ist eine Variable, die für den Betrieb des Aktors notwendig ist.

Durch die Verwendung der Information von zwei Kennfeldern unterschiedlicher Aktoren, die in einem Prozessstrang angeordnet sind und sich daher gegenseitig beeinflussen, kann der Wert einer Prozessvariablen so ermittelt werden, dass sich eine hinreichende Genauigkeit ergibt und der derart ermittelte Wert der Prozessvariablen zur Regelung oder Steuerung der fluidtechnischen Anlage verwendet werden kann.

Eine Regelung oder Steuerung ist dann gegeben, wenn das Verhalten wenigstens eines Aktors in der fluidtechnischen Anlage beeinflusst wird.

Bevorzugt kann aus dem Wert einer ersten Betriebsvariablen und dem Kennfeld des ersten Aktors ein Wert einer ersten Ableitvariablen, sozusagen indirekt, ermittelt werden und aus dem Wert der zweiten Betriebsvariablen und dem Kennfeld kann ein Wert einer zweiten Ableitvariablen, ermittelt werden, da sich mit Hilfe des Kennfeldes der Zusammenhang zwischen dem Wert der Betriebsvariablen und der Ableitvariablen ermitteln lässt. Aus dem Wert der ersten Ableitvariablen und dem Wert der zweiten Ableitvariablen wird dann der Wert der Prozessvariablen ermittelt.

Insbesondere entsprechen die erste Ableitvariable und die zweite Ableitvariable der Prozessvariablen. Dies hat zur Folge, dass für die Prozessvariable zwei Werte zur Verfügung stehen, die basierend auf unterschiedlichen Grundlagen ermittelt wurden. Aus den beiden Werten kann dann der Wert der Prozessvariablen ermittelt werden.

Gemäß einer bevorzugten Ausgestaltung kann in dem Fall, dass durch die Wahl zweier Ableitvariablen zwei Werte der Prozessvariablen zur Verfügung stehen, der Wert der Prozessvariablen durch eine Mittelwertbildung aus den beiden Werten bestimmt werden, z.B. durch Bildung des arithmetischen Mittels, des geometrischen Mittels, oder eines gewichteten gleichen Mittelwerts.

Gemäß einer weiteren Ausgestaltung des Verfahrens können die Werte der beiden Prozessvariablen intelligent verglichen werden, um eine verbesserte Qualität des Werts der Prozessvariablen zu erhalten. Dies könnte beispielsweise unter der Berücksichtigung von bekannten Abweichungen des Aktors erfolgen.

Auf diese Weise kann für den Wert einer Prozessvariablen eine höhere Genauigkeit erreicht werden, so dass der so ermittelte Wert der Prozessvariablen für die Prozessregelung oder Steuerung eingesetzt werden kann und eine separate Messung mittels eines Sensors für die Messung der Prozessvariablen entfallen kann.

Ferner kann die erste Ableitvariable unterschiedlich zur zweiten Ableitvariablen sein. So kann die erste Ableitvariable der Prozessvariablen entsprechen und die zweite Ableitvariable kann einer Betriebsvariablen entsprechen, die die Prozessvariable beeinflusst. So kann bei der Bestimmung des Werts der Prozessvariablen der Wert der ersten Ableitvariablen um den Wert der zweiten Ableitvariablen korrigiert werden. Auf diese Weise kann der Wert einer Prozessvariablen an einer Stelle des Prozessstrangs ermittelt werden, ohne dass ein weiterer Sensor in den Prozessstrang eingebracht werden muss.

Gemäß einer vorteilhaften Weiterbildung der Erfindung werden die Werte der Betriebsvariablen, durch einen Sensor erfasst.

Bevorzugt ist ein erster Aktor eine Pumpe und eine erste Betriebsvariable die Drehzahl oder die Leistungsaufnahme. Das Kennfeld kann bevorzugt den Förderstrom über die Drehzahl abbilden.

Sowohl die Drehzahl als auch die Leistungsaufnahme können auch als zwei Betriebsvariablen vorliegen. So kann ein n-dimensionales Kennfeld beispielsweise zudem die Variablen Lautstärke der Pumpengeräusche und / oder Förderstrom und / oder Frequenzanalyse des Geräuschs nach FourierTransformation umfassen.

Insbesondere kann ein zweiter Aktor ein Stellventil sein. Die Betriebsvariable des Stellventils ist die Ventilstellung. Das Kennfeld bildet insbesondere den Durchflusskoeffizienten über die Ventilstellung ab.

Die Ventilstellung kann direkt von einem Sensor gemessen werden. Es ist auch denkbar, dass die Betriebsvariable der Antriebsdruck ist. Die Ventilstellung kann dann über die Einbeziehung des Kennfelds, das die Ventilstellung über den Antriebsdruck abbildet, ermittelt werden. Anschließend erfolgt die Ermittlung des Durchflusskoeffizienten über die Ventilstellung.

Gemäß einem weiteren Aspekt der Erfindung betrifft dies eine prozesstechnische Anlage, umfassend einen Prozessstrang, in dem Fluid gefördert wird, wobei ein erster Aktor in den Prozessstrang eingebunden ist und dem ersten Aktor ein erstes Kennfeld über eine erste Betriebsvariable zugeordnet ist, das auf einer ersten Speichereinheit abgelegt ist. Ferner umfasst die Anlage einen Sensor, der die erste Betriebsvariable des ersten Aktors erfasst, wobei der erfasste Wert der ersten Betriebsvariablen, an eine erste Kommunikationseinheit übermittelt wird. Ferner umfasst die Anlage eine erste Recheneinheit, die aus der Kennlinie und dem Wert der ersten Betriebsvariablen den Wert einer ersten Ableitvariablen ermittelt.

Ferner ist ein zweiter Aktor in den Prozessstrang eingebunden, wobei dem Aktor ein zweites Kennfeld über eine zweite Betriebsvariable zugeordnet ist, das auf einer zweiten Speichereinheit abgelegt ist. Ferner umfasst die Anlage einen zweiten Sensor, der die zweite Betriebsvariable des zweiten Aktors erfasst, wobei der erfasste Wert der Betriebsvariablen, an eine zweite Erfassungseinheit übermittelt wird. Ferner umfasst die Anlage eine zweite Recheneinheit die aus der Kennlinie und dem Wert der zweiten Betriebsvariablen den Wert einer zweiten Ableitvariablen (Förderhöhe) ermittelt.

Ferner ist eine dritte Recheneinheit vorgesehen, die aus dem ersten Wert der ersten Ableitvariablen und dem Wert der zweiten Ableitvariablen den Wert einer Prozessvariablen bildet.

Die erste Ableitvariable und die zweite Ableitvariable entsprechen der Prozessvariablen.

Die erste Ableitvariable und die zweite Ableitvariable können unterschiedliche Variablen sein. Aus der ersten Ableitvariablen und der zweiten Ableitvariablen kann dann die Prozessvariable errechnet werden.

So kann in einer Anordnung von einer Pumpe und einem nachfolgenden Ventil in einem Prozessstrang beispielsweise als erste Ableitvariable der Druck vor dem Ventil und als Zweite Variable die Öffnungsweite des Ventils bestimmt werden, wobei als Prozessvariable der Druck nach dem Ventil ermittelt werden kann.

Die erste Recheneinheit, die zweite Recheneinheit und die dritte Recheneinheit bilden bevorzugt eine gemeinsame Recheneinheit, die insbesondere in der übergeordneten Steuereinheit/ Prozesssteuerung untergebracht ist.

Gemäß einer alternativen Ausgestaltung kann eine erste Recheneinheit am ersten Aktor untergebracht sein, wobei der Wert der Ableitvariablen an die dritte Recheneinheit übergeben wird, die in der Steuereinheit/Prozessteuerung liegt. Analog kann diese Ausgestaltung auch auf die zweite Recheneinheit Anwendung finden.

Bevorzugt kann das Verfahren auf einen Prozessstrang angewendet werden, der eine Pumpe und ein Stellventil umfasst. Entsprechend dem Verfahren zur Bestimmung des Werts der Prozessvariablen P ist die erste Betriebsvariable die Drehzahl der Pumpe und das erste Kennfeld bildet den Förderstrom über die Drehzahl ab. Damit kann der Volumenstrom durch die Pumpe erzeugt wird berechnet werden. Zur genaueren Berechnung kann auch die Leistungsaufnahme der Pumpe berücksichtigt werden.

Der zweite Aktor ist in Form eines pneumatisch betriebenen Stellventils ausgebildet. Die zweite Betriebsvariable bildet den Antriebsdruck im Antrieb des Stellventils ab. Das zweite Kennfeld bildet den Antriebsdruck im unbelasteten Zustand über die Ventilstellung ab. Mittels der Antriebsdruckmessung und der Messung der Ventilstellung und dem Kennfeld "Durchflusskoeffizient / Ventilstellung" in Kombination mit den Kennfeldern "Antriebsdruck (unbelasteter Zustand / Ventilstellung" und dem drosselkörperspezifischen Kennfeld "Differenzdruck-Korrekturfaktor / Ventilstellung" wird der zweite Wert des Volumenstroms bestimmt, indem auch die Stoffdaten des Prozessmediums (Dichte, Viskosität) sowie, der Differenzdruck über den Drosselkörper und die Temperatur T1 verrechnet werden.

Die Daten des Mediums können in Form einer Tabelle oder Funktion im Stellventil hinterlegt sein und von dort neben dem Kennfeld ausgelesen werden. Es ist auch denkbar, dass die Dichtewerte und die Viskositätswerte des Prozessmediums in einem Speicher der Steuereinheit hinterlegt sind und ausgelesen werden.

Hinterlegt sind beispielsweise für ein inkompressibles Medium, die Größen Dichte und Viskosität, je in Abhängigkeit der Temperatur. Die Temperaturmessung kann entweder mediumsberührt erfolgen oder nicht mediumsberührt durch Applikation eines Temperaturfühlers an das Ventilgehäuse (optional an den Rahmen oder auch im Stellungsregler) mit einer entsprechenden Übertragungsfunktion.

Der erste Wert des Volumenstroms und der zweite Wert des Volumenstroms werden in einem dritten Verarbeitungsschritt zu einem Wert der Prozessvariablen "Volumenstrom" ausgewertet.

Dies geschieht insbesondere dadurch, dass entweder ein Mittelwert gebildet wird oder ein mehrdimensionales Kennfeld "Prozessvariablenabweichung (typischer Fehlerkurven der einzelnen Feldgeräte) / Ventilstellung / Drehzahl" generiert wird.

In der einfachsten Ausführung wird der Wert der Prozessvariablen mit der geringsten Abweichung ausgegeben. Diese Variante ist beispielsweise anwendbar, wenn keine höchsten Genauigkeiten erforderlich sind und keine Modulkalibrierung vorliegt.

Eine zweite Möglichkeit ist, basierend auf dem mehrdimensionalen Kennfeld einen resultierenden Prozessvariablenkorrekturfaktor zu generieren. Dieser Korrekturfaktor kann entweder über die Kalibrierung einzelner Feldgeräte oder des gesamten Moduls erfolgen.

Auf diese Weise kann aus dem Antriebsdruck des Stellventils, der Drehzahl der Pumpe und den Kennfeldern der Pumpe und des Stellventils der Volumenstrom im Prozessstrang hinreichend genau berechnet werden.

Ferner betrifft die Erfindung eine prozesstechnische Anlage, in der ein Fluid gefördert wird, im Rahmen der das vorbeschriebene Verfahren Anwendung findet. Die prozesstechnische Anlage umfasst einen ersten Aktor, umfassend eine erste Aktorkommunikationseinheit zur Kommunikation mit einem anderen Aktor und / oder mit einer übergeordneten Steuereinheit und/oder einem Sensor. Ferner umfasst die Anlage eine erste Speichereinheit, auf der ein erstes Kennfeld des ersten Aktors, das eine Abhängigkeit von einer ersten Betriebsvariablen abbildet, abgelegt ist.

Die prozesstechnische Anlage umfasst zudem einen zweiten Aktor, umfassend eine zweite Aktorkommunikationseinheit zur Kommunikation mit einem anderen Aktor und / oder mit einer übergeordneten Steuereinheit und / oder einem Sensor, und eine zweite Speichereinheit, auf der das Kennfeld des zweiten Aktors, das eine Abhängigkeit von einer zweiten Betriebsvariablen darstellt, abgelegt ist.

In der prozesstechnischen Anlage sind in einem Prozessstrang der erste Aktor und der zweite Aktor, insbesondere über eine Rohrleitung, in einem Prozessstrang fluidisch verbunden.

Die prozesstechnische Anlage weist zudem im Prozessstrang einen ersten Sensor zur Erfassung einer ersten Betriebsvariablen und eine erste Sensorkommunikationseinheit zur Kommunikation mit einem anderen Aktor und / oder mit einer übergeordneten Steuereinheit und/oder einem Sensor auf.

Zudem ist ein zweiter Sensor zur Erfassung einer zweiten Betriebsvariablen und eine zweite Sensorkommunikationseinheit zur Kommunikation mit einem anderen Aktor und / oder mit einer übergeordneten Steuereinheit und/oder einem Sensor, in dem Prozessstrang vorgesehen.

Die prozesstechnische Anlage umfasst zudem eine erste Recheneinheit zur Berechnung des Werts einer ersten Ableitvariablen unter Verwendung des ersten Kennfelds und des Werts der ersten Betriebsvariablen, sowie eine zweite Recheneinheit zur Berechnung des Werts einer zweiten Ableitvariablen unter Verwendung des zweiten Kennfelds und des Werts der zweiten Betriebsvariablen.

Ferner ist eine dritte Recheneinheit zur Berechnung des Werts der Prozessvariablen aus dem Wert der ersten Ableitvariablen und dem Wert der zweiten Ableitvariablen vorgesehen.

Insbesondere weist die Anlage eine übergeordnete Steuereinheit zur Steuerung und / oder Regelung von wenigstens zwei Aktoren auf, umfassend eine Steuerkommunikationseinheit, die mit den Sensoren und den Aktoren verbunden ist.

Bevorzugt können die erste Recheneinheit, die zweite Recheneinheit und die dritte Recheneinheit in einer gemeinsamen Recheneinheit ausgeführt sein, wobei die gemeinsame Recheneinheit bevorzugt in der übergeordneten Steuereinheit angeordnet ist.

Alternativ kann auch jeweils die erste Recheneinheit am Aktor angeordnet sein, wobei die mittels der ersten Recheneinheit ermittelte erste Ableitvariable mit Hilfe der Aktorkommunikationseinheit übertragen werden kann.

Insbesondere bilden der erste Aktor und der erste Sensor ein erstes Feldgerät und / oder der zweite Aktor und der zweite Sensor ein zweites Feldgerät.

In diesem Fall sind die erste Aktorkommunikationseinheit und die erste Sensorkommunikationseinheit in einer gemeinsamen ersten Feldgerätkommunikationseinheit umgesetzt. So können sowohl die Steuerdaten für den Aktor als auch die Messdaten des Sensors über die Feldgerätkommunikationseinheit an eine übergeordnete Steuereinheit oder ein anderes Feldgerät übermittelt werden.

Die Übertragung kann kabelgebunden oder kabellos erfolgen.

Dasselbe kann auch für eine zweite Aktorkommunikationseinheit und die zweite Sensorkommunikationseinheit gelten, die in einer gemeinsamen zweiten Feldgerätkommunikationseinheit umgesetzt sind.

Der erste Aktor kann bevorzugt einen Speicher für das erste Kennfeld umfassen, wobei das Kennfeld insbesondere die Hauptfunktion des Aktors abbildet. Die Hauptfunktion des Aktors ist beispielsweise der Kv-Wert über die Ventilstellung. Bei einer Pumpe beispielsweise der Förderstrom über die Drehzahl.

Der Aktor kann so lokal auf die Kennlinie zugreifen. Das Kennfeld kann aber auch, sofern der Aktor an eine übergeordnete Steuereinheit angeschlossen ist, von dieser vom Speicher des Aktors über eine Datenverbindung, die Teil der Aktorkommunikationseinheit sein kann, ausgelesen werden. Auf diese Weise bringt der Aktor, bzw. jedes Feldgerät, das in einen Prozessstrang eingebunden wird, selbst sein Kennfeld mit, anhand dessen Werte weitere Prozessvariablen berechnet werden können. Alternativ kann auch das Kennfeld auf einem über ein Netzwerk verbundenen Rechner dezentral abgelegt sein. Dies stellt eine sogenannte Cloud Lösung dar. Die übergeordnete Steuereinheit oder die Aktorkommunikationseinheit stellen dazu die notwendigen Kommunikationsschnittstellen zur Verfügung.

So kann auch analog der zweite Aktor den zweiten Speicher für das zweite Kennfeld umfassen.

Bevorzugt umfassen die erste, die zweite und die dritte Recheneinheit eine CPU, ein FPGA, ein DSP oder einen Mikrokontroller. So kann die Recheneinheit je nach Bedingung, gemäß den Vorzügen der jeweiligen Lösung ausgestaltet sein.

Gemäß einer weiteren vorteilhaften Ausgestaltung können die Kommunikationseinheiten derart eingerichtet sein, dass sie über ein vermaschtes Netz, insbesondere Funknetz verbunden sind.

Dies ermöglicht unter anderem die Kommunikation zwischen zwei Feldgeräten und auch zwischen den Feldgeräten und einer übergeordneten Steuereinheit.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Ansicht des erfindungsgemäßen Verfahrens
- Fig. 2: eine detaillierte Abbildung des Verfahrens;
- Fig. 3: ein Ausführungsbeispiel des Verfahrens mit einer Pumpe und einem Stellventil;
- Fig.4: eine erfindungsgemäße funktionale Anordnung in einem Prozessstrang;
- Fig. 5: eine weitere erfindungsgemäße funktionale Anordnung in einem Prozessstrang;
- Fig. 6: eine weitere erfindungsgemäße funktionale Anordnung in einem Prozessstrang, und
- Fig. 7: eine weitere erfindungsgemäße funktionale Anordnung in einem Prozessstrang.

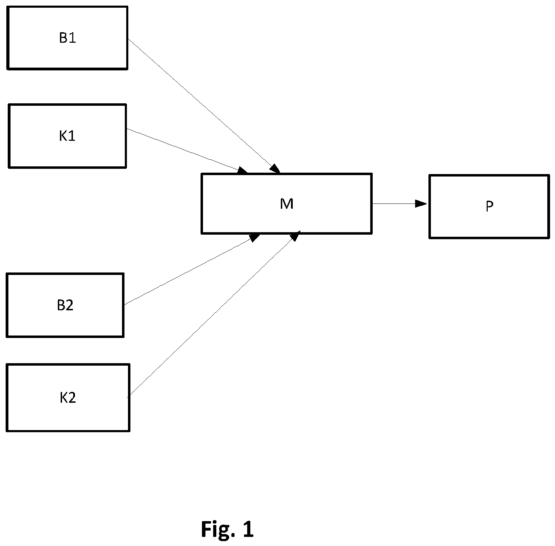

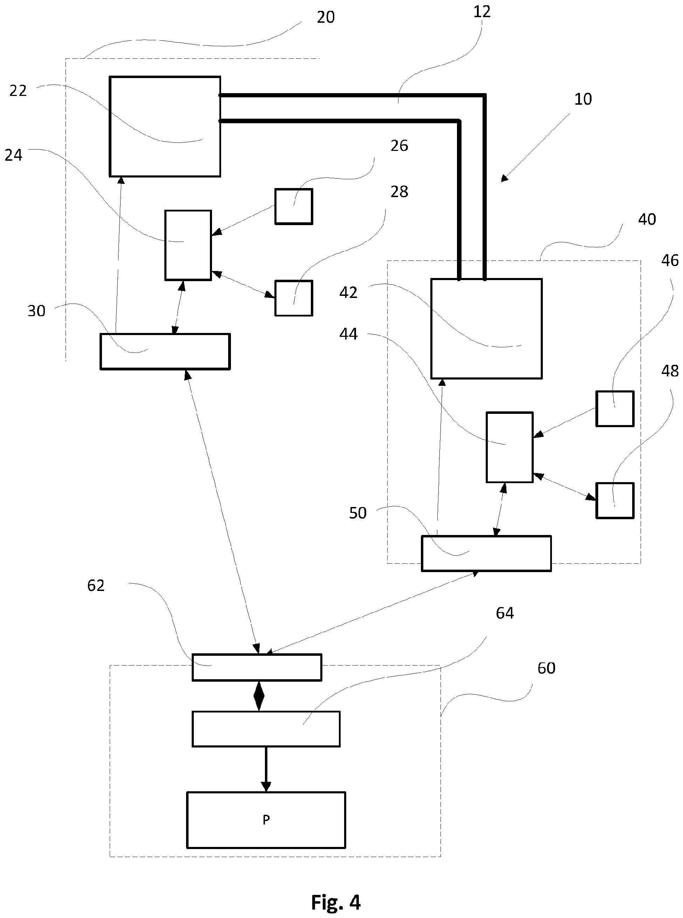

Fig. 1 zeigt eine schematische Darstellung des erfindungsgemäßen Verfahrens zur Bestimmung des Werts einer Prozessvariablen P. Im vorliegenden Beispiel sind in einem Prozessstrang zwei Aktoren vorgesehen wie auch in den Fig. 4 ff beschrieben. Jedem Aktor ist je ein Kennfeld K1, K2 zugeordnet, das einen Zusammenhang über eine Betriebsvariable B1, B2 abbildet. Die Betriebsvariablen B1, B2 werden insbesondere mit Hilfe von Sensoren erfasst. Die Betriebsvariablen B1, B2, sowie die Kennfelder K1 und K2 gehen in das Rechenmodell M ein. Das Rechenmodell M ist so gewählt, dass abhängig von dem Wert der Betriebsvariablen B1, B2 der Wert einer Prozessvariablen P ermittelt wird. Die Prozessvariable P ist dabei unterschiedlich zu den Betriebsvariablen B1, B2.

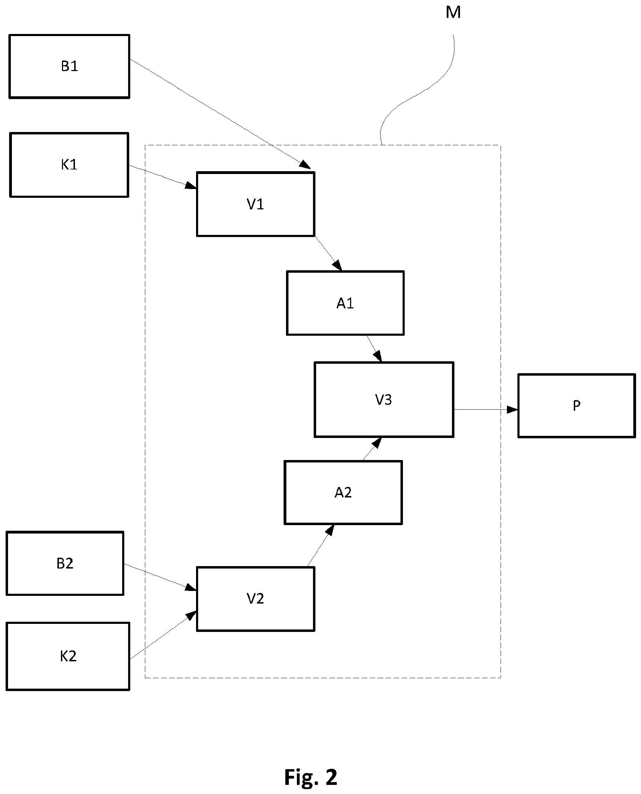

Fig. 2 zeigt eine detaillierte Abbildung des Verfahrens, wobei das Rechenmodell M drei Verarbeitungsschritte umfasst. In einem Verarbeitungsschritt V1 wird aus dem Kennfeld K1 und der Betriebsvariablen B1 eine Ableitvariable A1 erzeugt. In einem Verarbeitungsschritt V2 wird aus dem Kennfeld K2 und der Betriebsvariablen B2 eine Ableitvariable A2 erzeugt. In einem dritten Verarbeitungsschritt V3 wird aus den beiden Ableitvariablen A1, A2 die Prozessvariable P gebildet.

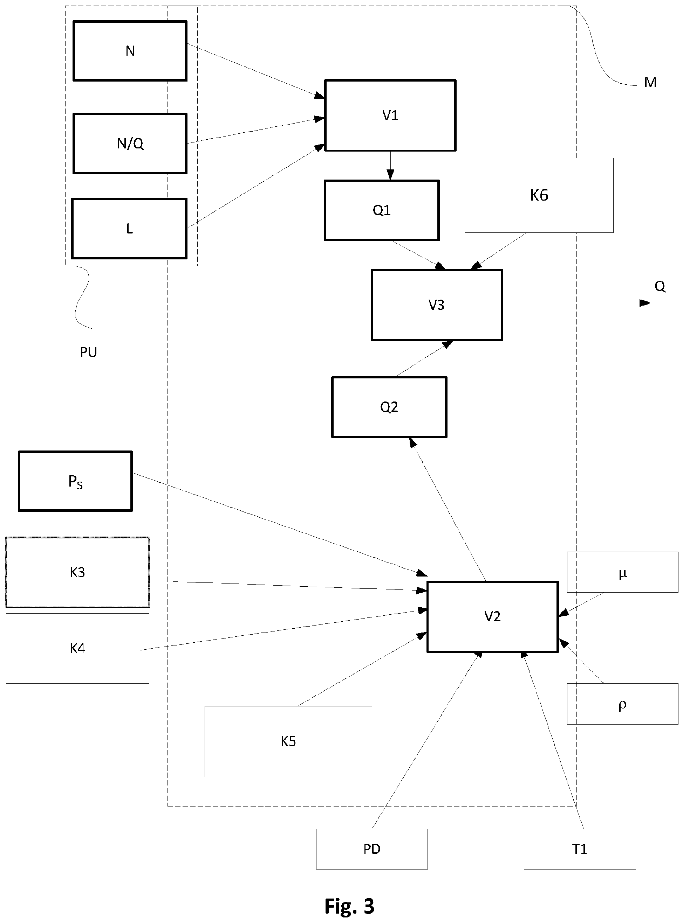

Dies kann erfolgen, indem die Ableitvariable A1 und die Ableitvariable A2 die Prozessvariable darstellen, beispielsweise den Volumenstrom im Prozessstrang. Die Prozessvariable wird über die Kennfelder K1, K2 und die Betriebsvariablen B1, B2 ermittelt. Der Wert der Prozessvariablen P ergibt sich beispielsweise, indem aus den beiden Werten der Ableitvariablen A1, A2, das arithmetische Mittel gebildet wird, wobei auch andere Verknüpfungsmöglichkeiten der beiden Ableitvariablen bestehen. Eine entsprechende Umsetzung ist in Fig. 3 näher beschrieben.

Fig. 3 zeigt ein Ausführungsbeispiel, gemäß dem eine Pumpe PU und ein Stellventil fluidisch in einem Prozessstrang verbunden sind. Entsprechend dem Verfahren zur Bestimmung des Werts der Prozessvariablen P ist die Betriebsvariable B1 die Drehzahl N der Pumpe PU und das Kennfeld K1 bildet den Förderstrom über die Drehzahl N ab. Über den Förderstrom ist der vermeintliche Volumenstrom Q1 bekannt, der durch die Pumpe PU erzeugt wird. Zur genaueren Berechnung kann auch in der V1 auch die Leistungsaufnahme der Pumpe PU berücksichtigt werden.

Der zweite Aktor ist in Form eines pneumatisch betriebenen Stellventils ST ausgebildet. Die Betriebsvariable B2 bildet den Antriebsdruck PS im Membranantrieb des Stellventils ab. Das Kennfeld K2 bildet den Antriebsdruck im unbelasteten Zustand über die Ventilstellung ab.

Mittels der Antriebsdruckmessung und der Messung der Ventilstellung und dem Kennfeld "Durchflusskoeffizient / Ventilstellung" in Kombination mit den Kennfeldern K3 "Antriebsdruck (unbelasteter Zustand / Ventilstellung" und dem drosselkörperspezifischen Kennfeld K4 "Differenzdruck-Korrekturfaktor / Ventilstellung" wird von der zweiten Verarbeitungseinheit V2 der Volumenstrom Q2 bestimmt, indem auch die Stoffdaten des Prozessmediums (Dichte ρ, Viskosität µ) sowie, der Differenzdruck über den Drosselkörper und die Temperatur T1 verrechnet werden.

Auch kann das Kennfeld K5 "Durchflusskoeffizient/Ventilstellung"und der Differenzdruck PD über das Stellventil in die Berechnung mit einfließen.

Das Medium kann in Form einer Tabelle oder Funktion im Stellventil hinterlegt sein und von dort neben dem Kennfeld ausgelesen werden. Hinterlegt sind beispielsweise für ein inkompressibles Medium, die Größen Dichte und Viskosität, je in Abhängigkeit der Temperatur. Die Temperaturmessung kann entweder mediumsberührt erfolgen oder nicht mediumsberührt durch Applikation eines Temperaturfühlers an das Ventilgehäuse (optional an den Rahmen oder auch im Stellungsregler) mit einer entsprechenden Übertragungsfunktion.

Der erste Volumenstromwert Q1 und der zweite Volumenstromwert Q2 werden in einem dritten Verarbeitungsschritt V3 zu einem Volumenstromwert Q ausgewertet.

Dies geschieht insbesondere dadurch, dass ein mehrdimensionales Kennfeld K6 "Prozessvariablenabweichung (typischer Fehlerkurven der einzelnen Feldgeräte) / Ventilstellung / Drehzahl" generiert wird.

In der einfachsten Ausführung wird der Wert der Prozessvariablen mit der geringsten Abweichung ausgegeben. Diese Variante ist beispielsweise anwendbar, wenn keine höchsten Genauigkeiten erforderlich sind und keine Modulkalibrierung vorliegt.

Eine zweite Möglichkeit ist, basierend auf dem mehrdimensionalen Kennfeld einen resultierenden Prozessvariablenkorrekturfaktor zu generieren. Dieser Korrekturfaktor kann entweder über die Kalibrierung einzelner Feldgeräte oder des gesamten Moduls erfolgen.

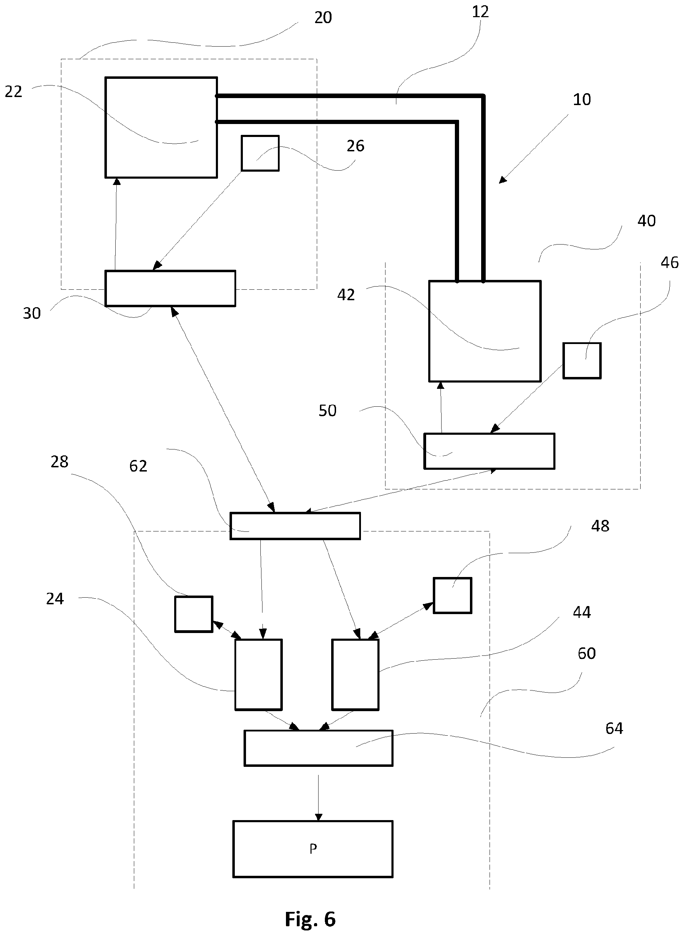

Fig. 4 zeigt eine funktionale schematische Ansicht einer ersten erfindungsgemäßen Anordnung 10 in einem Prozessstrang, umfassend ein erstes Feldgerät 20 und ein zweites Feldgerät 40. Das erste Feldgerät 20 umfasst einen ersten Aktor 22, eine erste Recheneinheit 24, einen ersten Sensor 26 zur Erfassung des Werts einer Betriebsvariablen B1 des Aktors 22, einen ersten Speicher 28 auf der die Kennlinie K1 des Aktors 22 in Bezug auf die Betriebsvariable B1 abgelegt ist und eine Aktorkommunikationseinheit 30 zur Kommunikation mit einer übergeordneten Prozessteuerung 60, wozu diese ebenfalls eine Kommunikationseinheit 62 umfasst. Über die Aktorkommunikationseinheit 30 kann beispielsweise sowohl die Betriebsvariable B1 von der übergeordneten Prozessteuerung 60 ausgelesen werden als auch ein Stellsignal für den Aktor 22 empfangen werden. Die Aktorkommunikatinseinheit kann auch als Feldgerätkommunikationseinheit ausgebildet sein und auch den Sensorwert an die übergeordnete Steuereinheit 60 liefern, wie dies beispielsweise insbesondere in einer Ausführung gemäß Fig. 6 der Fall ist. Dies gilt auch für die zweite Aktorkommunikationseinheit 50. Die Recheneinheit 24 ist derart ausgebildet, dass diese, ein Kennfeld K1 aus dem Speicher 28 ausliest und einen Wert der Betriebsvariablen B1 vom Sensor 26 empfängt. Mit Hilfe des Kennfelds K1 und der Betriebsvariablen B1 wird von der ersten Recheneinheit 24 ein erster Wert einer Ableitvariablen A1 berechnet und über die Aktorkommunikationseinheit 30 an die übergeordnete Prozessteuerung 60 übertragen.

Gemäß der vorliegenden Ausgestaltung ist das zweite Feldgerät 40 ähnlich dem ersten Feldgerät 20 aufgebaut. Das zweite Feldgerät 40 umfasst ebenfalls einen zweiten Aktor 42, der eine zum ersten Aktor 22 unterschiedliche Funktion hat. Die Aktoren 22, 42 sind über eine fluidische Verbindung, insbesondere über eine Rohrleitung 12, miteinander verbunden. Das zweite Feldgerät 40 umfasst eine zweite Recheneinheit 44, sowie einen zweiten Sensor 46 zur Erfassung des Werts einer Betriebsvariablen B2 des zweiten Aktors 42, einen zweiten Speicher 48 auf der die Kennlinie K2 des Aktors 42 in Bezug auf die Betriebsvariable B2 abgelegt ist und eine zweite Aktorkommunikationseinheit 50 zur Kommunikation mit der übergeordneten Prozessteuerung 60. Über die zweite Aktorkommunikationseinheit 50 kann beispielsweise sowohl die Betriebsvariable B2 von der übergeordneten Prozessteuerung 60 ausgelesen werden als auch ein Stellsignal für den Aktor 22 empfangen werden. Die Recheneinheit 44 ist derart ausgebildet, dass diese, ein Kennfeld K2 aus dem Speicher 48 ausliest und einen Wert der Betriebsvariablen B2 vom Sensor 46 empfängt. Mit Hilfe des Kennfelds K2 und der Betriebsvariablen B2 wird von der zweiten Recheneinheit 44 ein Wert einer zweiten Ableitvariablen A2 berechnet und über die Aktorkommunikationseinheit 50 an die übergeordnete Prozessteuerung 60 übertragen.

Die Prozessteuerung 60 umfasst eine dritte Recheneinheit 64, die aus der von der ersten Recheneinheit 30 und der zweiten Recheneinheit 50 übermittelten Ableitvariablen A1, A2 den Wert einer Prozessvariablen P ermittelt.

Die Umrechnung der Betriebsvariablen B1, B2 unter Verwendung der Kennfelder K1, K2 ist in einem Rechenmodell abgebildet, das unter Verwendung der ersten Recheneinheit 30, der zweiten Recheneinheit 50 und der dritten Recheneinheit 64 implementiert ist, wobei jede Recheneinheit 24, 44, 64 eine Teilaufgabe des Rechenmodells M abbildet.

Auf diese Weise können die Kennfelder K1, K2 und die entsprechenden Werte der Betriebsvariablen unmittelbar am jeweiligen Feldgerät 20, 40 dezentral ausgewertet werden, wobei das Gesamtergebnis in einer zentralen Prozesssteuerung 60 ausgewertet wird.

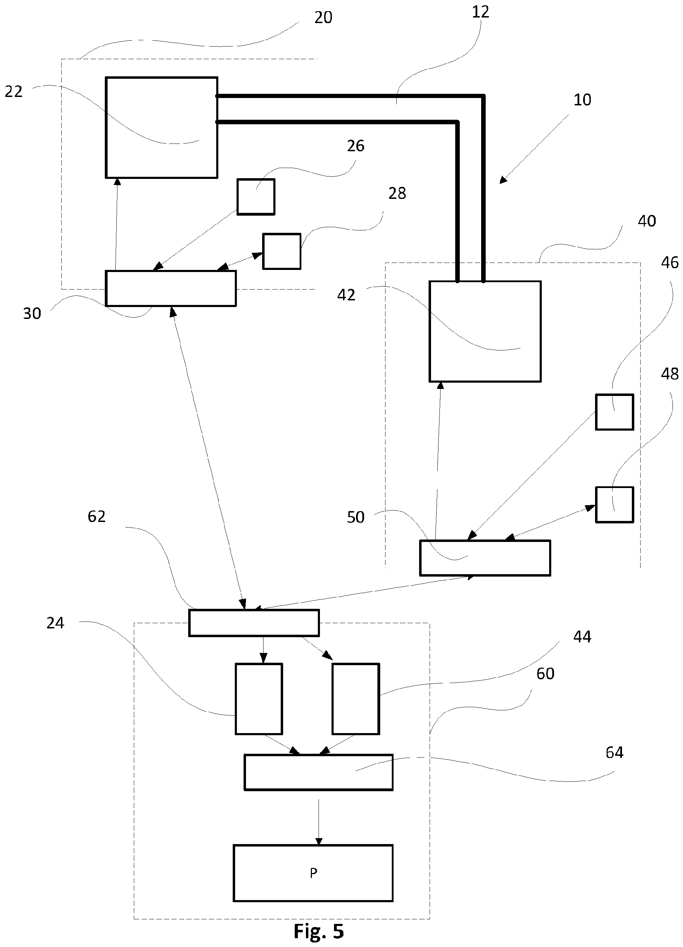

Fig. 5 zeigt eine weitere Ausgestaltung des in einer schematischen Ansicht. Ähnliche funktionale Einheiten, wie sie in Fig. 4 vorkommen, werden gleich bezeichnet. So sind wie auch gemäß Fig. 4 bereits beschrieben zwei Feldgeräte 20, 40 vorgesehen, die über eine Rohrleitung 12 miteinander verbunden sind. Gemäß der Ausgestaltung der in Fig. 5 beschriebenen Ausgestaltung umfasst das erste Feldgerät 20 einen ersten Aktor 22, einen ersten Sensor 26, einen ersten Speicher 28 und eine erste Aktorkommunikationseinheit 30 zur Übertragung des Werts der ersten Betriebsvariablen B1 an die übergeordnete Prozesssteuerung 60. Ferner ist die Kommunikationseinrichtung derart ausgebildet, dass die Prozessteuerung 60, das im ersten Speicher 28 hinterlegte Kennfeld K1 auslesen kann bzw. einen zu dem Wert der erfassten Betriebsvariablen B1 korrespondierenden Wert einer Ableitvariablen A1 unter Zuhilfenahme des Kennfelds K1 ermitteln kann. Dazu ist die erste Recheneinheit 24 in der zentralen Prozessteuerung 60 angeordnet. Dasselbe gilt analog für die Ausgestaltung des zweiten Feldgeräts 40. Auch in Verbindung mit dem zweiten Feldgerät 40 ist die zweite Recheneinheit 44 in der übergeordneten Prozesssteuerung 60 untergebracht und ermittelt die zweite Ableitvariable A2, indem die Werte der Betriebsvariablen B2 und das zweite Kennfeld K2 vom zweiten Feldgerät 40 abgefragt werden. Die Feldgeräte 20, 40 können auf diese Weise mit einer Kennlinie K1, K2 und einem Sensor zur Erfassung der Betriebsvariablen ausgeliefert werden, wodurch sichergestellt ist, dass bei Verwendung eines entsprechenden Feldgeräts alle notwendigen Informationen zur Verfügung stehen. Die dritte Recheneinheit 62 ist, wie gemäß Fig. 4 beschrieben in der übergeordneten Prozessteuerung 60 angeordnet und ermittelt aus den beiden Ableitwerten gemäß einem vorliegenden Rechenmodell M den Wert einer Prozessvariablen P.

In der Prozessteuerung 60 können so alle Recheneinheiten beispielsweise in Form eines PC ausgebildet sein, wodurch auch Berechnungen vorgenommen werden können, die eine hohe Rechenleistung erfordern, wobei das Rechenmodell M insbesondere als computerimplementiertes Verfahren auf dem PC implementiert ist.

So können auch Feldgeräte verwendet werden, deren Recheneinheit nicht vorhanden oder für die vorliegende Aufgabe nicht ausreichend dimensioniert sind.

Fig. 6 zeigt eine weitere Abwandlung der Fig. 5, wobei im Gegensatz zur Fig. 5 die erste Speichereinheit 28 für das erste Kennfeld K1 und die zweite Speichereinheit 48 für das zweite Kennfeld K2 ebenfalls in der übergeordneten Prozessteuerung 60 untergebracht sind. In dieser Ausführung müssen von den Feldgeräten lediglich die Betriebsvariablen B1, B2 abgefragt werden, die dann an die übergeordnete Prozessteuerung 60 übermittelt werden. Die erste Recheneinheit 24 und zweite Recheneinheit 44 sind ebenfalls in der Prozesssteuerung 60 untergebracht. Die Recheneinheiten können, das auf dem zugeordneten Speicher abgelegte Kennfeld K1, K2 mit dem Wert der entsprechenden Betriebsvariablen B1, B2 auswerten und anhand der erzeugten Ableitvariablen A1, A2, kann dann die dritte Recheneinheit 64 den Wert des Prozessparameters P bestimmen.

Diese Anordnung eignet sich besonders für die Nachrüstung eines bestehenden Prozessstrangs 10, da die Kennlinien nicht auf einem Speicher des Feldgeräts abgelegt werden müssen, sondern einfach zentral in der Prozesssteuerung 60 abgelegt werden können.

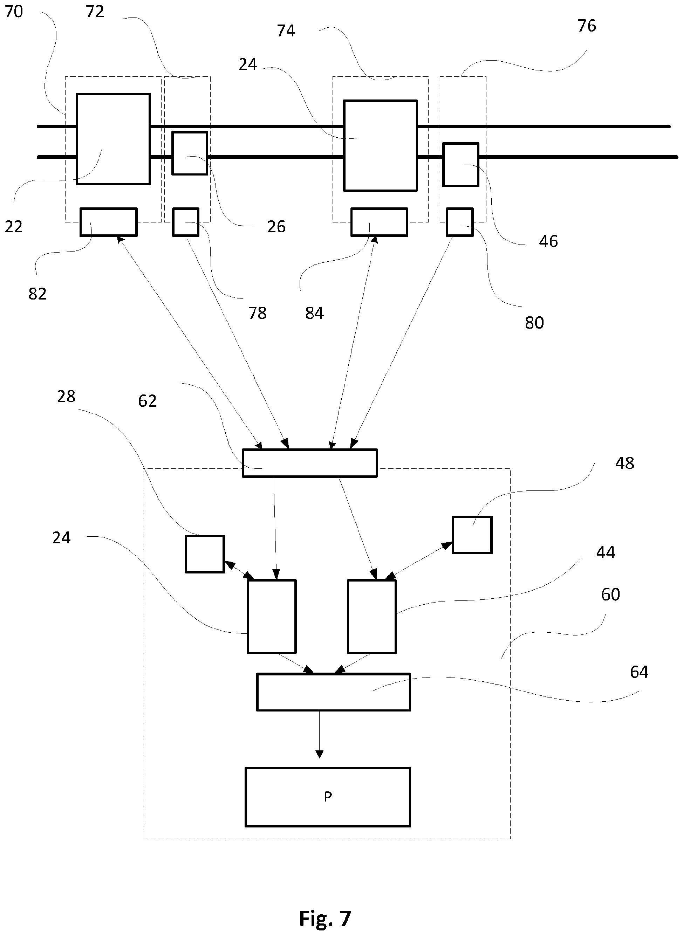

Fig. 7 zeigt eine weitere Ausgestaltung eines erfindungsgemäßen Prozessstrangs. Es sind vier Feldgeräte 70, 72, 74 ,76 in dem Prozessstrang vorgesehen. Das erste Feldgerät 70 und das dritte Feldgerät 74 umfassen je einen Aktor 22, 42 und je einen Aktorkommunikationseinrichtung 82, 84. Das zweite Feldgerät 72 und das vierte Feldgerät 76 umfassen je einen Sensor 26, 46 und je eine Sensorkommunikationseinrichtung 78, 80.

Der erste Aktor 22, wird im vorgenannten Fall über die übergeordnete Prozesssteuerung 60 abhängig von der Betriebsvariablen, die über den Sensor 26 erfasst wird gesteuert. Der zweite Aktor 24 wird ebenfalls über die übergeordnete Prozessteuerung 60 abhängig von der vom Sensor 46 erfassten Betriebsvariablen gesteuert.

Der Aktor 22, 24 und der jeweils zugeordnete Sensor 26, 46 müssen erfindungsgemäß nicht in einem gemeinsamen Feldgerät untergbracht sein, sondern können auch über den Prozessstrang verteilt angeordnet sein.

Ferner ist eine übergeordnete Prozesssteuerung 60 gemäß Fig. 6 vorgesehen. Die übergeordnete Prozesssteuerung 60 weist eine Kommunikationseinheit 62 auf. Die Kommunikationseinheit 62 ist mit den Aktorkommunikationseinrichtungen 82, 84 und den Sensorkommunikationseinheiten 78, 80 verbunden. Die übergeordnete Prozessteuerung 60 kann auf diese Weise die Sensordaten, die die Betriebsvariablen für die zugeordneten Aktoren 22, 24 erfassen, erfragen und die in der Speichereinheit 28, 48 abgelegten Kennfelder auswerten. Anhand der ausgelesenen Kennfelder kann, wie in Fig. 6 beschrieben, eine gewünschte Prozessgröße zuverlässig ermittelt werden.

### Bezugszeichenliste

- 10: Anordnung
- 20: erstes Feldgerät
- 22: ersten Aktor
- 24: erste Recheneinheit
- 26: erster Sensor
- 28: erster Speicher
- 30: Feldgerätkommunikationseinheit
- 40: zweites Feldgerät
- 42: zweiter Aktor
- 44: zweite Recheneinheit
- 46: zweiter Sensor
- 48: zweiter Speicher
- 50: Feldgerätkommunikationseinheit
- 52: Sensorkommunikationseinheit
- 64: dritte Recheneinheit
- 60: übergeordnete Prozesssteuerung
- 62: Kommunikationseinheit
- 70: erstes Feldgerät
- 72: zweites Feldgerät
- 74: drittes Feldgerät
- 76: viertes Feldgerät
- 78: Sensorkommunikationseinheit
- 80: Sensorkommunikationseinheit

- 82: Aktorkommunikationseinheit
- 84: Aktorkommunikationseinheit
- B1: Betriebsvariable
- B2: Betriebsvariable
- P: Prozessvariable
- M: Rechenmodell
- B2: Betriebsvariable
- K1: Kennfeld
- K2: Kennfeld
- V1: Verarbeitungsschritt
- V2: Verarbeitungsschritt
- V3: Verarbeitungsschritt
- A1: Ableitvariable
- A2: Ableitvariable
- Q: Volumenstromwert
- Q1: Volumenstromwert
- Q2: Volumenstromwert
- PS: Antriebsdruck
- PU: Pumpe
- N: Drehzahl
- L: Leistung

## Patentansprüche

1. Verfahren zur Bestimmung des Werts einer Prozessvariablen (P) zur Prozessregelung in einem Prozessstrang einer fluidtechnischen Anlage (10), in dem ein Prozessmedium gefördert wird, wobei in dem Prozessstrang ein erster Aktor (22) und ein zweiter Aktor (42) liegen, die fluidisch verbunden sind, wobei dem ersten Aktor (22) eine erste Betriebsvariable (B1) und dem zweiten Aktor (42) eine zweite Betriebsvariable (B2) zugeordnet ist, und dem ersten Aktor (22) ein auf der ersten Betriebsvariablen (B1) basierendes erstes Kennfeld (K1) zugeordnet ist und dem zweiten Aktor (42) ein auf der zweiten Betriebsvariablen (B2) basierendes zweites Kennfeld (K2), **dadurch gekennzeichnet, dass** unter Verwendung der Werte der ersten Betriebsvariablen (B1) und der zweiten Betriebsvariablen (B2) und eines Rechenmodells (M), das das erste Kennfeld (K1) und das zweite Kennfeld (K2) umfasst, der Wert der von den Betriebsvariablen (B1, B2) unterschiedlichen Prozessvariablen (P) bestimmt wird.

2. Verfahren nach Anspruch 1, **dadurch gekennzeichnet, dass** in dem Rechenmodell (M) aus dem Wert einer ersten Betriebsvariablen (B1) und dem ersten Kennfeld (K1) ein Wert einer ersten Ableitvariablen (A1) ermittelt wird und aus dem Wert der zweiten Betriebsvariablen (B2) und dem zweiten Kennfeld (K2) ein Wert einer zweiten Ableitvariablen (A2) ermittelt wird und aus der ersten Ableitvariablen (A1) und der zweiten Ableitvariablen (A2) der Wert der Prozessvariablen (P) ermittelt wird, wobei insbesondere die erste Ableitvariable (A1) und die zweite Ableitvariable (A2) der Prozessvariablen (P) entsprechen.

3. Verfahren nach Anspruch 2, **dadurch gekennzeichnet, dass** gemäß dem Rechenmodell (M) zur Bestimmung des Werts der Prozessvariablen (P) der Wert der ersten Ableitvariablen (A1) und der Wert der zweiten Ableitvariablen (A2) gemittelt werden, und/oder dass der Wert der ersten Ableitvariablen (A1) und der Wert der zweiten Ableitvariablen (A2) derart intelligent verglichen werden, dass eine Fehlerkurve des Aktors (22, 42) berücksichtigt wird.

4. Verfahren nach einem der vorangehenden Ansprüche 1 bis 3, **dadurch gekennzeichnet, dass** das Rechenmodell (M) Fluidparameter, wie Dichte, Viskosität und/oder Temperatur des geförderten Prozessmediums, und/oder die Auswirkungen der Rohrleitungen zwischen den Aktoren (22, 42) in dem Prozessstrang berücksichtigt.

5. Verfahren nach einem der vorangehenden Ansprüche 1 bis 4, **dadurch gekennzeichnet, dass** das Kennfeld (K1) des ersten Aktors (22) von einer Speichereinheit (28) des ersten Aktors (22) ausgelesen wird und/oder das Kennfeld (K2) des zweiten Aktors (42) von einer Speichereinheit (48) des zweiten Aktors (42) ausgelesen wird.

6. Verfahren nach einem der vorangehenden Ansprüche 1 bis 5, **dadurch gekennzeichnet, dass** der erste Aktor (22) eine Pumpe (PU), die Betriebsvariable (B1) die Drehzahl (N) der Pumpe (PU) und das Kennfeld (K2) den Förderstrom (Q1) über die Drehzahl (N) abbildet.

7. Verfahren nach einem der vorangehenden Ansprüche 1 bis 6, **dadurch gekennzeichnet, dass** der zweite Aktor (24) ein fluidisch betriebenes Stellventil (ST) ist, die Betriebsvariable (B2) der Steuerdruck (PA) ist und das Kennfeld (K2) den Steuerdruck, den Durchfluss (Q2) und /oder die Geräuschentwicklung beinhaltet.

8. Verfahren nach einem der Ansprüche 1 bis 7, **dadurch gekennzeichnet, dass** die Prozessvariable (P) der Durchfluss (Q) ist, dass der erste Aktor eine Pumpe (PU), die Betriebsvariable (B1) die Drehzahl (N) der Pumpe (PU) ist und das Kennfeld (K1) den Förderstrom (Q1) über die Drehzahl (N) abbildet, dass der zweite Aktor (42) ein fluidisch betriebenes Stellventil (ST) ist, die Betriebsvariable (B2) der Steuerdruck (PS) ist und das Kennfeld (K1) den Steuerdruck (PS), den Durchfluss (Q2) und die Geräuschentwicklung beinhaltet, ferner wird der Differenzdruck über das Stellventil erfasst und in das Rechenmodell (M) einbezogen.

9. Verfahren nach Anspruch 8, **dadurch gekennzeichnet, dass** das Rechenmodell (M) ferner ein mehrdimensionales Kennfeld (typische Fehlerkurven der einzelnen Aktoren) / Ventilstellung / Drehzahl umfasst zur Korrektur des Durchfluss-Werts.

10. Verfahren nach einem der Ansprüche 8 oder 9, **dadurch gekennzeichnet, dass** das Rechenmodell (M) die Leistungsaufnahme (L) und/oder den Wirkungsgrad der Pumpe (PU) einbezieht.

11. Prozesstechnische Anlage (10) in der ein Prozessmedium gefördert wird, umfassend:
- einen ersten Aktor (22) umfassend eine erste Aktorkommunikationseinheit (82) zur Kommunikation mit einem anderen Aktor (42) und / oder mit einer übergeordneten Steuereinheit (60) und/oder einem Sensor (26, 46)
- ein auf einer ersten Speichereinheit (28) abgelegtes Kennfeld (K1) des Aktors (22)
- einen zweiten Aktor (42) umfassend eine zweite Aktorkommunikationseinheit (84) zur Kommunikation mit einem anderen Aktor (22) und / oder mit einer übergeordneten Steuereinheit (60) und /oder einem Sensor (26, 46)
- und eine zweite Speichereinheit (48), auf der das Kennfeld (K2) des zweiten Aktors (42) abgelegt ist,
- wobei der erste Aktor (22) und der zweite Aktor (42), insbesondere über eine Rohrleitung (12), fluidisch verbunden sind,
- einen ersten Sensor (26) zur Erfassung einer ersten Betriebsvariablen (B1) und eine erste Sensorkommunikationseinheit (78) zur Kommunikation mit einem anderen Aktor (22, 42) und/oder mit einer übergeordneten Steuereinheit (60) und/oder einem Sensor
- einen zweiten Sensor (46) zur Erfassung einer zweiten Betriebsvariablen (B2) und eine zweite Sensorkommunikationseinheit (80) zur Kommunikation mit einem anderen Aktor und / oder mit einer übergeordneten Steuereinheit (60) und/oder einem Sensor
- eine erste Recheneinheit (24) zur Berechnung des Werts einer ersten Ableitvariablen (A1) unter Verwendung des ersten Kennfelds (K1) und des Werts der ersten Betriebsvariablen (B1)
- eine zweite Recheneinheit (44) zur Berechnung des Werts einer zweiten Ableitvariablen (A2) unter Verwendung des zweiten Kennfelds (K2) und des Werts der zweiten Betriebsvariablen (B2)
- eine dritte Recheneinheit (64) zur Berechnung des Werts der Prozessvariablen (P) aus dem Wert der ersten Ableitvariablen (A1) und dem Wert der zweiten Ableitvariablen (A2).

12. Anlage nach Anspruch 11, **dadurch gekennzeichnet, dass** die Anlage (10) eine übergeordnete Steuereinheit (60) zur Steuerung und / oder Regelung von wenigstens zwei Aktoren (22, 42) aufweist, umfassend eine Steuereinheitskommunikationseinheit (62), die mit den Sensoren (26, 46) und den Aktoren (22, 42) verbunden ist.

13. Anlage nach Anspruch 12, **dadurch gekennzeichnet, dass** die erste Recheneinheit (24), die zweite Recheneinheit (44) und die dritte Recheneinheit (64) in einer gemeinsamen Recheneinheit ausgeführt sind.

14. Anlage nach einem der Ansprüche 11 bis 13, **dadurch gekennzeichnet, dass** der erste Aktor (22) und der erste Sensor (26, 46) ein erstes Feldgerät (20) bilden, wobei die erste Aktorkommunikationseinheit (82) und die erste Sensorkommunikationseinheit (78) in einer gemeinsamen ersten Feldgerätkommunikationseinheit (30) abgebildet sind, und/oder dass der zweite Aktor (42) und der zweite Sensor (46) ein zweites Feldgerät (40) bilden, wobei die zweite Aktorkommunikationseinheit (84) und die zweite Sensorkommunikationseinheit (80) in einer gemeinsamen zweiten Feldgerätkommunikationseinheit (50) abgebildet sind.

15. Anlage nach Anspruch 14, **dadurch gekennzeichnet, dass** der erste Aktor (22) einen Speicher (28) für die erste Kennlinie (K1) und/oder der zweite Aktor (46) einen zweiten Speicher (48) für die zweite Kennlinie (K2) umfasst.

## Claims

1. Method for determining the value of a process variable (P) for process control in a fluid power system (10) process train that conveys a process medium, which process train has a first actuator (22) and a second actuator (42) arranged in it which are fluidically connected, with a first operating variable (B1) being assigned to said first actuator (22) and a second operating variable (B2) being assigned to said second actuator (42), and said first actuator (22) being assigned a first characteristic map (K1) based on said first operating variable (B1) and the second actuator (42) being assigned a second characteristic map (K2) based on said second operating variable (B2), **characterized in that** the values of said first operating variable (B1) and said second operating variable (B2) and a computational model (M) that comprises said first characteristic map (K1) and said second characteristic map (K2) are used to determine the value of the process variable (P) that differs from said operating variables (B1, B2).

2. Method according to claim 1, **characterized in that,** in said computational model (M), a value of a first derivative variable (A1) is determined from the value of a first operating variable (B1) and the first characteristic map (K1), and a value of a second derivative variable (A2) is determined from the value of the second operating variable (B2) and the second characteristic map (K2), and the value of said process variable (P) is determined from said first derivative variable (A1) and said second derivative variable (A2), in particular wherein said first derivative variable (A1) and said second derivative variable (A2) correspond to said process variable (P).

3. Method according to claim 2, **characterized in that,** according to said computational model (M) for determining the value of said process variable (P), the value of said first derivative variable (A1) and the value of said second derivative variable (A2) are averaged, and/or **in that** there is a smart comparison of the value of said first derivative variable (A1) and the value of said second derivative variable (A2) in such a way that an error curve of said actuator (22, 42) is taken into account.

4. Method according to any one of claims 1 to 3 above, **characterized in that** said computational model (M) takes into account fluid parameters, such as the density, viscosity and/or temperature of the conveyed process medium, and/or the impact of piping between said actuators (22, 42) in the process train.

5. Method according to any one of claims 1 to 4 above, **characterized in that** said characteristic map (K1) of said first actuator (22) is read out of a memory unit (28) of said first actuator (22) and/or said characteristic map (K2) of said second actuator (42) is read out of a memory unit (48) of said second actuator (42).

6. Method according to any one of claims 1 to 5 above, **characterized in that** said first actuator (22) represents a pump (PU), said operating variable (B1) represents the rotational speed (N) of said pump (PU), and said characteristic map (K2) represents the flow rate (Q1) via the rotational speed (N).

7. Method according to any one of claims 1 to 6 above, **characterized in that** said second actuator (24) is a fluidically operated control valve (ST), said operating variable (B2) is the control pressure (PA), and said characteristic map (K2) includes control pressure, flow rate (Q2) and/or noise generation.

8. Method according to any one of claims 1 to 7 above, **characterized in that** said process variable (P) is the flow rate (Q), that said first actuator is a pump (PU), said operating variable (B1) is the rotational speed (N) of said pump (PU), and the characteristic map (K1) represents the flow rate (Q1) via the rotational speed (N), that said second actuator (42) is a fluidically operated control valve (ST), said operating variable (B2) is the control pressure (PS) and said characteristic map (K1) includes said control pressure (PS), said flow rate (Q2) and noise generation, and that furthermore the differential pressure is detected by means of said control valve and included in the computational model (M).

9. Method according to claim 8, **characterized in that** said computational model (M) further comprises a multi-dimensional characteristic map (typical error curves of the individual actuators / valve position / rotational speed) for correcting the flow rate value.

10. Method according to any one of claims 8 or 9 above, **characterized in that** said computational model (M) includes the power consumption (L) and/or the efficiency of the pump (PU).

11. Process plant (10) in which a process medium is conveyed, comprising:
- a first actuator (22) comprising a first actuator communication unit (82) for communication with another actuator (42) and/or with a higher-level control unit (60) and/or with a sensor (26, 46),
- a characteristic map (K1) of said actuator (22) stored in a first memory unit (28),
- a second actuator (42) comprising a second actuator communication unit (84) for communication with another actuator (22) and/or with a higher-level control unit (60) and/or with a sensor (26, 46), and
- a second memory unit (48) which stores said characteristic map (K2) of said second actuator (42),
- said first actuator (22) and said second actuator (42) being fluidically connected, in particular via a pipeline (12),
- a first sensor (26) for detecting a first operating variable (B1), and a first sensor communication unit (78) for communicating with another actuator (22, 42) and/or with a higher-level control unit (60) and/or with a sensor,
- a second sensor (46) for detecting a second operating variable (B2) and a second sensor communication unit (80) for communicating with another actuator and/or with a higher-level control unit (60) and/or a sensor,
- a first computational unit (24) for computing the value of a first derivative variable (A1) using said first characteristic map (K1) and the value of said first operating variable (B1),
- a second computational unit (44) for computing the value of a second derivative variable (A2) using said second characteristic map (K2) and the value of said second operating variable (B2),
- a third computational unit (64) for computing the value of said process variable (P) from the value of said first derivative variable (A1) and the value of said second derivative variable (A2).

12. Process plant according to claim 11, **characterized in that** said system (10) includes a higher-level control unit (60) for controlling and/or regulating at least two actuators (22, 42), comprising a control unit communication unit (62) connected to said sensors (26, 46) and said actuators (22, 42).

13. Process plant according to claim 12, **characterized in that** said second computational unit (44) and said third computational unit (64) are implemented as a common computational unit.

14. Process plant according to any one of claims 11 to 13 above, **characterized in that** said first actuator (22) and said first sensor (26, 46) constitute a first field device (20), with said first actuator communication unit (B2) and said first sensor communication unit (78) being represented in a common first field device communication unit (30), and/or **in that** said second actuator (42) and said second sensor (46) constitute a second field device (40), with said second actuator communication unit (84) and said second sensor communication unit (80) being represented in a common second field device communication unit (50).

15. Process plant according to claim 14, **characterized in that** said first actuator (22) comprises a memory (28) for said first characteristic curve (K1) and/or said second actuator (46) comprises a second memory (48) for said second characteristic curve (K2).

## Revendications

1. Procédé pour la détermination de la valeur d'une variable de processus (P) pour la régulation de processus dans une ligne de processus d'une installation fluidique (10), dans laquelle un milieu de processus est transporté, dans lequel un premier actionneur (22) et un deuxième actionneur (42), qui sont en liaison fluidique, se situent dans la ligne de processus, dans lequel une première variable de fonctionnement (B1) est associée au premier actionneur (22) et une deuxième variable de fonctionnement (B2) au deuxième actionneur (42), et un premier diagramme caractéristique (K1) basé sur la première variable de fonctionnement (B1) est associé au premier actionneur (22) et un deuxième diagramme caractéristique (K2) basé sur la deuxième variable de fonctionnement (B2) au deuxième actionneur (42), **caractérisé en ce que** la valeur de la variable de processus (P) différente des variables de fonctionnement (B1, B2) est déterminée au moyen des valeurs de la première variable de fonctionnement (B1) et de la deuxième variable de fonctionnement (B2) et d'un modèle de calcul (M), qui comprend le premier diagramme caractéristique (K1) et le deuxième diagramme caractéristique (K2).

2. Procédé selon la revendication 1, **caractérisé en ce que** dans le modèle de calcul (M) une valeur d'une première variable de dérivation (A1) est déterminée à partir de la valeur d'une première variable de fonctionnement (B1) et du premier diagramme caractéristique (K1) et une valeur d'une deuxième variable de dérivation (A2) est déterminée à partir de la valeur de la deuxième variable de fonctionnement (B2) et du deuxième diagramme caractéristique (K2) et la valeur de la variable de processus (P) est déterminée à partir de la première variable de dérivation (A1) et de la deuxième variable de dérivation (A2), dans lequel en particulier la première variable de dérivation (A1) et la deuxième variable de dérivation (A2) correspondent à la variable de processus (P).

3. Procédé selon la revendication 2, **caractérisé en ce que** selon le modèle de calcul (M) pour la détermination de la valeur de la variable de processus (P) la moyenne de la valeur de la première variable de dérivation (A1) et de la valeur de la deuxième variable de dérivation (A2) est calculée, et/ou que la valeur de la première variable de dérivation (A1) et la valeur de la deuxième variable de dérivation (A2) sont comparées de manière intelligente de telle sorte qu'une courbe d'erreurs de l'actionneur (22, 42) est prise en compte.

4. Procédé selon l'une quelconque des revendications 1 à 3, **caractérisé en ce que** le modèle de calcul (M) prend en compte les paramètres de fluide, tels que la densité, la viscosité et/ou la température du milieu de processus transporté, et/ou les effets des conduites tubulaires entre les actionneurs (22, 42) dans la ligne de processus.

5. Procédé selon l'une quelconque des revendications précédentes 1 à 4, **caractérisé en ce que** le diagramme caractéristique (K1) du premier actionneur (22) est consulté par une unité mémoire (28) du premier actionneur (22) et/ou le diagramme caractéristique (K2) du deuxième actionneur (42) est consulté par une unité mémoire (48) du deuxième actionneur (42).

6. Procédé selon l'une quelconque des revendications précédentes 1 à 5, **caractérisé en ce que** le premier actionneur (22) est une pompe (PU), la variable de fonctionnement (B1) la vitesse de rotation (N) de la pompe (PU) et le diagramme caractéristique (K2) reproduit le flux de transport (Q1) sur la vitesse de rotation (N).

7. Procédé selon l'une quelconque des revendications précédentes 1 à 6, **caractérisé en ce que** le deuxième actionneur (42) est une soupape de réglage à fonctionnement fluidique (ST), la variable de fonctionnement (B2) est la pression de commande (PA) et le diagramme caractéristique (K2) comporte la pression de commande, le débit (Q2) et/ou l'émission de bruits.

8. Procédé selon l'une quelconque des revendications 1 à 7, **caractérisé en ce que** la variable de processus (P) est le débit (Q), que le premier actionneur est une pompe (PU), la variable de fonctionnement (B1) la vitesse de rotation (N) de la pompe (PU) et le diagramme caractéristique (K1) reproduit le flux de transport (Q1) sur la vitesse de rotation (N), que le deuxième actionneur (42) est une soupape de réglage à fonctionnement fluidique (ST), la variable de fonctionnement (B2) la pression de commande (PS) et le diagramme caractéristique (K1) comporte la pression de commande (PS), le débit (Q2) et l'émission de bruits, en outre la différence de pression est acquise par l'intermédiaire de la soupape de réglage et intégrée dans le modèle de calcul (M).

9. Procédé selon la revendication 8, **caractérisé en ce que** le modèle de calcul (M) comprend en outre un diagramme caractéristique multidimensionnel (courbes d'erreurs typiques des actionneurs individuels)/position de soupape/vitesse de rotation pour la correction de la valeur de débit.

10. Procédé selon l'une quelconque des revendications 8 ou 9, **caractérisé en ce que** le modèle de calcul (M) intègre la puissance absorbée (L) et/ou le rendement de la pompe (PU).

11. Installation de technique de processus (10) dans laquelle un milieu de processus est transporté, comprenant :
- un premier actionneur (22) comprenant une première unité de communication d'actionneur (82) pour la communication avec un autre actionneur (42) et/ou avec une unité de commande supérieure (60) et/ou un capteur (26, 46)
- un diagramme caractéristique (K1) de l'actionneur (22) mis en mémoire dans une première unité mémoire (28)
- un deuxième actionneur (42) comprenant une deuxième unité de communication d'actionneur (84) pour la communication avec un autre actionneur (22) et/ou avec une unité de commande supérieure (60) et/ou un capteur (26, 46)
- et une deuxième unité mémoire (48), dans laquelle le diagramme caractéristique (K2) du deuxième actionneur (42) est mis en mémoire,
- dans laquelle le premier actionneur (22) et le deuxième actionneur (42) sont en liaison fluidique, en particulier par l'intermédiaire d'une conduite tubulaire (12),
- un premier capteur (26) pour l'acquisition d'une première variable de fonctionnement (B1) et une première unité de communication de capteur (78) pour la communication avec un autre actionneur (22, 42) et/ou avec une unité de commande supérieure (60) et/ou un capteur
- un deuxième capteur (46) pour l'acquisition d'une deuxième variable de fonctionnement (B2) et une deuxième unité de communication de capteur (80) pour la communication avec un autre actionneur et/ou avec une unité de commande supérieure (60) et/ou un capteur
- une première unité de calcul (24) pour le calcul de la valeur d'une première variable de dérivation (A1) au moyen du premier diagramme caractéristique (K1) et de la valeur de la première variable de fonctionnement (B1)
- une deuxième unité de calcul (44) pour le calcul de la valeur d'une deuxième variable de dérivation (A2) au moyen du deuxième diagramme caractéristique (K2) et de la valeur de la deuxième variable de fonctionnement (B2)
- une troisième unité de calcul (64) pour le calcul de la valeur de la variable de processus (P) à partir de la valeur de la première variable de dérivation (A1) et de la valeur de la deuxième variable de dérivation (A2).

12. Installation selon la revendication 11, **caractérisée en ce que** l'installation (10) présente une unité de commande supérieure (60) pour la commande et/ou régulation d'au moins deux actionneurs (22, 42), comprenant une unité de communication d'unité de commande (62), qui est reliée aux capteurs (26, 46) et aux actionneurs (22, 42).

13. Installation selon la revendication 12, **caractérisée en ce que** la première unité de calcul (24), la deuxième unité de calcul (44) et la troisième unité de calcul (64) sont réalisées dans une unité de calcul commune.

14. Installation selon l'une quelconque des revendications 11 à 13, **caractérisée en ce que** le premier actionneur (22) et le premier capteur (26, 46) forment un premier appareil de terrain (20), dans laquelle la première unité de communication d'actionneur (82) et la première unité de communication de capteur (78) sont reproduites dans une première unité de communication d'appareil de terrain (30) commune, et/ou que le deuxième actionneur (42) et le deuxième capteur (46) forment un deuxième appareil de terrain (40), dans laquelle la deuxième unité de communication d'actionneur (84) et la deuxième unité de communication de capteur (80) sont reproduites dans une deuxième unité de communication d'appareil de terrain (50) commune.

15. Installation selon la revendication 14, **caractérisée en ce que** le premier actionneur (22) comprend une mémoire (28) pour le premier diagramme caractéristique (K1) et/ou le deuxième actionneur (42) une deuxième mémoire (48) pour le deuxième diagramme caractéristique (K2).
